# FASCICULE DE BREVET EUROPEEN

(11) **EP 2 651 684 B1**
(45) Date de publication et mention de la délivrance du brevet: **11.02.2015**
(21) Numéro de dépôt: 11794495.9
(22) Date de dépôt: 13.12.2011
(51) Int. Cl.: B60K 37/00, B60R 13/02, F16B 5/06

(54) **SYSTÈME D'ASSEMBLAGE D'UN ORGANE D'ASPECT SUR UN ÉLÉMENT D'HABILLAGE DE VÉHICULE**
SYSTEM ZUR MONTAGE EINES ZIERELEMENTS AUF EINEM FAHRZEUGVERKLEIDUNGSTEIL
SYSTEM FOR ASSEMBLING A DECORATIVE MEMBER ONTO A VEHICLE TRIM ELEMENT

(30) Priorité: 14.12.2010 FR 1060496
(43) Date de publication de la demande: 23.10.2013
(73) Titulaire: Faurecia Intérieur Industrie, 92000 Nanterre (FR)
(72) Inventeur: ROBIN, Stéphane, F-60000 Beauvais (FR); MOREL, Merry, F-60110 Esches (FR); DESMEDT, Stéphane, F-95150 Taverny (FR)
(74) Mandataire: Blot, Philippe Robert Emile
(86) Numéro de dépôt international: PCT/EP2011/072661
(87) Numéro de publication internationale: WO 2012/080283

(56) Documents cités:
- WO-A1-2010/004804
- JP-A- 2007 168 492
- JP-A- 2008 254 479
- US-A- 3 271 059

## Description

La présente invention concerne un ensemble d'un élément d'habillage intérieur de véhicule automobile et d'un organe d'aspect.

Par exemple, mais de manière non limitative, l'élément d'habillage intérieur forme une planche de bord, et l'organe d'aspect forme une façade centrale.

Un ensemble d'un élément d'habillage intérieur comprenant toutes les caractéristiques du préambule de la revendication 1 est connu du document JP 2008 254 479 A.

Une façade centrale est destinée à être rapportée sur une partie centrale d'une planche de bord, après que cette planche de bord ait été montée sur le véhicule automobile. A cet effet, la façade centrale comporte généralement des éléments d'encliquetage, destinés à coopérer avec des premiers orifices complémentaires ménagés sur la planche de bord.

Lorsque le véhicule automobile comporte un coussin gonflable de sécurité (également appelé airbag), agencé du côté passager sous la planche de bord, le déploiement de ce coussin gonflable transmet habituellement un effort important à la façade centrale. Cet effort entraîne parfois la rupture des éléments d'encliquetage et l'éjection de cette façade centrale dans l'habitacle du véhicule automobile.

L'invention a notamment pour but de remédier à cet inconvénient, en fournissant des moyens, fiables et simples à mettre en oeuvre, de retenue de la façade centrale sur la planche de bord.

A cet effet, l'invention a notamment pour objet un ensemble d'un élément d'habillage intérieur de véhicule automobile, tel qu'une planche de bord et d'un organe d'aspect, tel qu'une façade centrale, caractérisé en ce que :
- l'organe d'aspect comporte au moins un élément d'encliquetage, et l'élément d'habillage présente au moins un premier orifice complémentaire de cet élément d'encliquetage,
- l'organe d'aspect comporte au moins un crochet de retenue, comprenant une patte s'étendant depuis une première extrémité reliée à l'organe d'aspect, jusqu'à une seconde extrémité munie d'une butée, et la planche de bord présente au moins un second orifice autorisant le passage de la butée à travers la planche de bord,
- le second orifice est adapté pour autoriser un déplacement du crochet de retenue, dans une direction de coulissement, entre une première position dans laquelle la butée est en regard de ce second orifice, et une seconde position dans laquelle la butée est en regard d'une zone de butée prévue sur la planche de bord,
- l'élément d'encliquetage, le crochet de retenue, le premier orifice et le second orifice sont agencés les uns par rapport aux autres de sorte que l'élément d'encliquetage est en regard du premier orifice seulement lorsque le crochet de retenue est dans sa seconde position.

Lorsque l'ensemble est assemblé, chaque élément d'encliquetage est inséré dans le premier orifice correspondant, et chaque crochet de retenue est dans sa seconde position, dans laquelle la butée de ce crochet est en regard d'une zone de butée correspondante.

Ainsi, en cas de rupture des éléments d'encliquetage, lorsque l'organe d'aspect est entraîné en retrait de l'élément d'habillage par l'effort dû au déploiement du coussin gonflable, la butée de chaque crochet de retenue vient en contact de la zone de butée correspondante, retenant ainsi de manière efficace la façade centrale.

On notera que l'invention a également pour avantage de permettre un démontage simple de l'organe d'aspect.

Un ensemble selon l'invention peut comporter en outre l'une ou plusieurs des caractéristiques suivantes, prises seules ou selon toutes les combinaisons techniquement possibles :
- l'élément d'encliquetage et le crochet de retenue sont adjacents, et le premier orifice est prolongé par le second orifice, de façon à former ensemble une unique ouverture ;
- le second orifice comporte une première partie, suffisamment large pour autoriser le passage de la butée à travers la planche de bord, et une seconde partie, plus étroite que la première partie dans une direction dans laquelle s'étend la butée, de façon à interdire le passage de la butée à travers l'élément d'habillage ;
- la zone de butée est en partie délimitée par les première et seconde parties du second orifice ;
- le crochet de retenue est rigide ;
- le crochet de retenue présente une hauteur, dans la direction de sa patte, supérieure à la hauteur de l'élément d'encliquetage dans la même direction, de sorte que la butée est formée dans une partie du crochet en saillie par rapport à l'élément d'encliquetage dans la direction de la patte ;
- le premier orifice et l'élément d'encliquetage sont conformés pour bloquer l'organe d'aspect dans la direction de coulissement lorsque cet élément d'encliquetage est engagé dans le premier orifice, de sorte que le crochet reste dans sa seconde position.

L'invention concerne également un procédé d'assemblage d'un organe d'aspect, tel qu'une façade centrale, et d'un élément d'habillage, tel qu'une planche de bord, d'un ensemble tel que défini précédemment, comportant les étapes suivantes :
- passage de la butée du crochet de retenue à travers le second orifice,
- déplacement du crochet de retenue jusqu'à sa seconde position, de façon à placer l'élément d'encliquetage en regard du premier orifice correspondant,
- insertion de l'élément d'encliquetage dans le premier orifice correspondant.

L'invention sera mieux comprise à la lecture de la description qui va suivre, donnée uniquement à titre d'exemple et faite en se référant aux figures annexées parmi lesquelles :
- la figure 1 est une vue en perspective d'une façade centrale d'un ensemble selon un exemple de mode de réalisation de l'invention ;
- la figure 2 est un détail d'une planche de bord de l'ensemble, montrant les premier et second orifices destinés à recevoir respectivement l'élément d'encliquetage et le crochet de retenue de la façade centrale de la figure 1 ;
- les figures 3 à 5 sont des vues en perspectives de la façade centrale de la figure 1 et de la planche de bord de la figure 2, au cours de trois étapes d'assemblage successives.

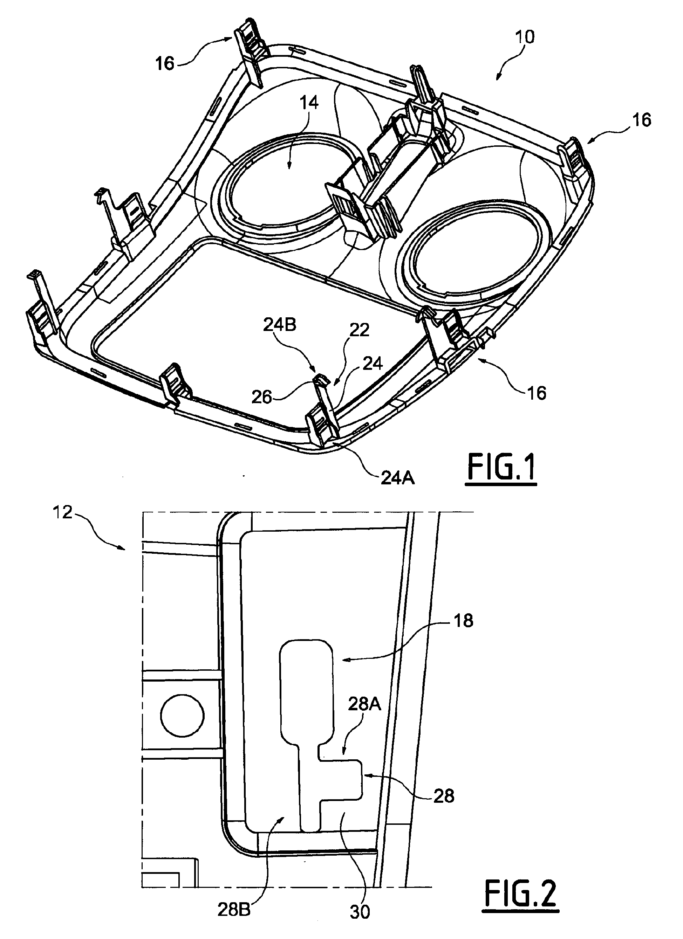

On a représenté, sur la figure 1, un organe d'aspect formant une façade centrale 10 pour un véhicule automobile, destinée à être rapportée sur une zone centrale d'un élément d'habillage formant une planche de bord 12, telle que celle représentée partiellement sur la figure 2. La figure 1 représente une face de la façade centrale 10 qui est destinée à être tournée vers la planche de bord 12.

La façade centrale 10 comporte, de manière classique, des ouvertures 14 pour le passage d'accessoires prévus sur la planche de bord 12, tels que des grilles de dispositifs de chauffage du véhicule automobile.

Afin de fixer la façade centrale 10 sur la planche de bord 12, la façade centrale 10 comporte au moins un élément d'encliquetage 16 destiné à coopérer avec un premier orifice complémentaire 18 ménagé dans la planche de bord 12. Conformément à l'exemple représenté, la façade centrale 10 comporte sept éléments d'encliquetage 16.

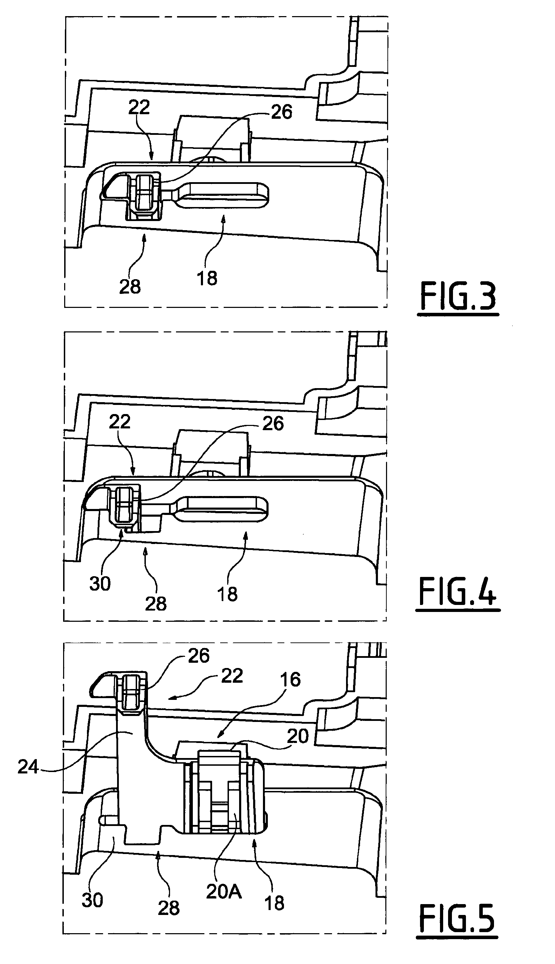

De tels éléments d'encliquetage 16 sont classiques et comportent par exemple chacun une pince métallique 20 munie de pattes d'encliquetage 20A, tel que cela est représenté sur la figure 5.

Afin de retenir la façade centrale 10 sur la planche de bord 12 en cas de rupture des éléments d'encliquetage 16, la façade centrale 10 comporte au moins un crochet de retenue 22, de préférence rigide. Chaque crochet 22 comprend une patte 24 s'étendant, dans une direction sensiblement perpendiculaire à la façade centrale 10 et à la planche de bord 12, depuis une première extrémité 24A reliée à la façade centrale 10 jusqu'à une seconde extrémité 24B munie d'une butée 26.

Les crochets de retenue 22 étant destinés à coopérer avec la façade 10 uniquement en cas de rupture des éléments d'encliquetage 16, ces crochets de retenue 22 présentent des hauteurs, dans la direction de leurs pattes 24, supérieures aux hauteurs des éléments d'encliquetage 16. En d'autres termes, chaque butée 26 est formée dans une partie du crochet 22 correspondant, en saillie par rapport aux élément d'encliquetage 16 dans la direction de la patte 24.

On notera que la direction de la patte 24 correspond à une direction d'engagement, dans laquelle la façade centrale 10 est déplacée pour être fixée à la planche de bord 12.

La planche de bord 12 présente, pour chaque crochet de retenue 22, un second orifice 28 autorisant le passage de ce crochet de retenue 22, notamment de sa butée 26, à travers la planche de bord 12.

Conformément à l'exemple de réalisation décrit, la façade centrale 10 comporte quatre crochets de retenue 22.

Comme cela est représenté sur la figure 1, chaque crochet de retenue 22 est adjacent à un élément d'encliquetage 16. Ainsi, comme cela est représenté sur la figure 2, chaque premier orifice 18 est prolongé par un second orifice 28, de façon à former ensemble une unique ouverture.

Toutefois, en variante, on pourrait prévoir d'agencer les crochets de retenue 22 à distance des éléments d'encliquetage 16.

Chaque second orifice 28 est adapté pour autoriser un déplacement du crochet de retenue 22 correspondant dans une direction de coulissement, entre une première position, représentée sur la figure 3, dans laquelle la butée 26 est en regard de ce second orifice 28, et une seconde position, représentée sur les figures 4 et 5, dans laquelle la butée 26 est en regard d'une zone de butée 30 prévue sur la planche de bord.

A cet effet, chaque second orifice 28 comporte par exemple une première partie 28A suffisamment large pour autoriser le passage de la butée 26 du crochet de retenue 22 correspondant, et une seconde partie 28B, plus étroite que la première partie 28A dans une direction dans laquelle s'étend la butée 26, interdisant le passage de cette butée 26. Ainsi, chaque crochet 22 est dans sa première position lorsqu'il se trouve inséré dans la première partie 28A, et dans sa seconde position lorsqu'il se trouve inséré dans la seconde partie 28B.

Dans l'exemple représenté sur la figure 2, la zone de butée 30 est en partie délimitée par ces première 28A et seconde 28B parties du second orifice 28.

Afin de permettre une fonction particulièrement fiable de retenue de la façade centrale 10 sur la planche de bord 12, les éléments d'encliquetage 16, les crochet de retenue 22, les premiers orifices 18 et les seconds orifices 28 sont agencés les uns par rapport aux autres de sorte que chaque crochet de retenue 22 est dans sa seconde position lorsque chaque élément d'encliquetage 16 est en regard du premier orifice 18 correspondant. En d'autres termes, chaque élément d'encliquetage 16 est en regard du premier orifice seulement lorsque chaque crochet de retenue 22 est dans sa seconde position.

Avantageusement, le premier orifice 18 et l'élément d'encliquetage 16 sont conformés pour bloquer l'organe d'aspect 10 dans la direction de coulissement lorsque cet élément d'encliquetage 16 est engagé dans le premier orifice 18, de sorte que le crochet 22 reste dans sa seconde position.

Ainsi, on s'assure que, dès lors que chaque élément d'encliquetage 16 est inséré dans le premier orifice 18 correspondant, chaque butée 26 est agencée en regard de la zone de butée 30 correspondante.

On notera que la rigidité de chaque crochet de retenue 22 est suffisante pour que ce crochet 22 ne risque pas de subir des déformations qui autoriseraient le passage de sa butée 26 par le second orifice 28 correspondant lorsqu'il se trouve dans sa seconde position. Les crochets de retenue 22 forment donc des moyens de retenue particulièrement fiables.

La façade centrale 10 et la planche de bord 12 sont assemblées au cours d'un procédé d'assemblage qui sera décrit en référence aux figures 3 à 5.

Au cours d'une première étape, représentée sur la figure 3, la butée 26 de chaque crochet de retenue 22 est passée à travers le second orifice 28 correspondant. Chaque crochet de retenue 22 se trouve alors dans sa première position.

Au cours d'une deuxième étape, représentée sur la figure 4, chaque crochet de retenue 22 est déplacé jusqu'à sa seconde position, de façon à placer les éléments d'encliquetage 16 en regard des premiers orifices 18 correspondants. Ce déplacement des crochets 22 et des éléments d'encliquetage 16 est effectué par un déplacement de la façade centrale 10 parallèlement à la planche de bord 12. Chaque crochet de retenue 22 se trouve alors dans sa seconde position, si bien que sa butée 26 se trouve en regard de la zone de butée 30 correspondante. La butée 26 ne peut alors plus passer à travers le second orifice 28 correspondant, si bien que le crocher 22 permet de retenir la façade centrale 10 sur la planche de bord 12.

Au cours d'une troisième étape, représentée sur la figure 5, la façade centrale 10 est déplacée en direction de la planche de bord 12 de façon à encliqueter chaque élément d'encliquetage 16 dans le premier orifice 18 correspondant.

Puisque chaque élément d'encliquetage 16 est en regard du premier orifice 18 correspondant, chaque crochet 22 est dans sa seconde position. Ainsi, en cas de rupture des éléments d'encliquetage 16, entraînant le déplacement de la façade centrale à distance de la planche de bord 12, les butées 26 viennent en contact des zones de butée 30 de la même manière que cela est représenté sur la figure 4, effectuant ainsi de manière efficace une retenue de la façade centrale 10.

On notera que l'invention n'est pas limitée aux modes de réalisation précédemment décrits mais pourrait présenter diverses variables sans sortir du cadre des revendications.

En particulier, tout organe d'aspect destiné à être rapporté sur un élément d'habillage (tel qu'une planche, un panneau, une console centrale ou un habillage de pièce de véhicule automobile), pourrait comporter des crochets de retenue semblables.

L'invention est particulièrement adaptée à tout organe d'aspect rapporté sur un élément d'habillage soumis à des déploiements d'airbag (par exemple d'airbag passage, d'airbag genoux, d'airbag siège, d'airbag rideau ou d'airbag de panneau de porte). L'invention est également adaptée à tout organe d'aspect rapporté sur un élément d'habillage soumis à des déformations importantes liées à un impact sur le véhicule automobile.

## Revendications

1. Ensemble d'un élément d'habillage intérieur (12) de véhicule automobile et d'un organe d'aspect (10), **caractérisé en ce que** :
- l'organe d'aspect (10) comporte au moins un élément d'encliquetage (16), et l'élément d'habillage (12) présente au moins un premier orifice (18) complémentaire de cet élément d'encliquetage (16),
- l'organe d'aspect (10) comporte au moins un crochet de retenue (22), comprenant une patte (24) s'étendant depuis une première extrémité (24A) reliée à l'organe d'aspect (10), jusqu'à une seconde extrémité (24B) munie d'une butée (26), et la planche de bord (12) présente au moins un second orifice (28) autorisant le passage de la butée (26) à travers la planche de bord (12),
- le second orifice (28) est adapté pour autoriser un déplacement du crochet de retenue (22), dans une direction de coulissement, entre une première position dans laquelle la butée (26) est en regard de ce second orifice (28), et une seconde position dans laquelle la butée (26) est en regard d'une zone de butée (30) prévue sur la planche de bord (12), **caractérisé en ce que**
- l'élément d'encliquetage (16), le crochet de retenue (22), le premier orifice (18) et le second orifice (28) sont agencés les uns par rapport aux autres de sorte que l'élément d'encliquetage (16) est en regard du premier orifice (18) seulement lorsque le crochet de retenue (22) est dans sa seconde position.

2. Ensemble selon la revendication 1, dans lequel l'élément d'encliquetage (16) et le crochet de retenue (22) sont adjacents, et le premier orifice (18) est prolongé par le second orifice (28), de façon à former ensemble une unique ouverture.

3. Ensemble selon la revendication 1 ou 2, dans lequel le second orifice (28) comporte une première partie (28A), suffisamment large pour autoriser le passage de la butée (26) à travers la planche de bord (12), et une seconde partie (28B), plus étroite que la première partie dans une direction dans laquelle s'étend la butée (26), de façon à interdire le passage de la butée (26) à travers l'élément d'habillage (12).

4. Ensemble selon la revendication 3, dans lequel la zone de butée (30) est en partie délimitée par les première (28A) et seconde (28B) parties du second orifice (28).

5. Ensemble selon l'une quelconque des revendications précédentes, dans lequel le crochet de retenue (22) est rigide.

6. Ensemble selon l'une quelconque des revendications précédentes, dans lequel le crochet de retenue (22) présente une hauteur, dans la direction de sa patte (24), supérieure à la hauteur de l'élément d'encliquetage (16) dans la même direction, de sorte que la butée est formée dans une partie du crochet (22) en saillie par rapport à l'élément d'encliquetage (16) dans la direction de la patte (24).

7. Ensemble selon l'une quelconque des revendications précédentes, dans lequel le premier orifice (18) et l'élément d'encliquetage (16) sont conformés pour bloquer l'organe d'aspect (10) dans la direction de coulissement lorsque cet élément d'encliquetage (16) est engagé dans le premier orifice (18), de sorte que le crochet (22) reste dans sa seconde position.

8. Ensemble selon l'une quelconque des revendications précédentes, dans lequel élément d'habillage intérieur (12) forme un élément choisi parmi : une planche de bord, un panneau intérieur, une console centrale ou tout élément d'habillage de pièce du véhicule.

9. Ensemble selon l'une quelconque des revendications précédentes, dans lequel l'organe d'aspect (10) forme une façade centrale.

10. Procédé d'assemblage d'un organe d'aspect (10) et d'un élément d'habillage (12) d'un ensemble selon l'une quelconque des revendications précédentes, comportant les étapes suivantes :
- passage de la butée (26) du crochet de retenue (22) à travers le second orifice (28),
- déplacement du crochet de retenue (22) jusqu'à sa seconde position, de façon à placer l'élément d'encliquetage (16) en regard du premier orifice (18) correspondant,
- insertion de l'élément d'encliquetage (16) dans le premier orifice (18) correspondant.

## Patentansprüche

1. Anordnung eines Innenverkleidungsteils (12) eines Kraftfahrzeugs und eines Sichtelements (10), **dadurch gekennzeichnet, dass**:
- das Sichtelement (10) mindestens ein Rastelement (16) aufweist und das Verkleidungsteil (12) mindestens eine erste Öffnung (18) aufweist, die komplementär zu diesem Rastelement (16) ist,
- das Sichtelement (10) mindestens einen einen Schenkel (24) umfassenden Haltehaken (22) aufweist, der sich von einem ersten, mit dem Sichtelement (10) verbundenen Ende (24A) bis zu einem zweiten, mit einem Anschlag (26) versehenen Ende (24B) erstreckt, und die Instrumententafel (12) mindestens eine zweite Öffnung (28) aufweist, die den Durchgang des Anschlags (26) durch die Instrumententafel (12) hindurch gestattet,
- wobei die zweite Öffnung (28) geeignet ist, eine Verschiebung des Haltehakens (22) in eine Gleitrichtung zwischen einer ersten Position, in der der Anschlag (26) gegenüber dieser zweiten Öffnung (28) angeordnet ist, und einer zweiten Position, in der der Anschlag (26) gegenüber einer Anschlagszone (30) angeordnet ist, die an der Instrumententafel (12) vorgesehen ist, zu gestatten, **dadurch gekennzeichnet, dass**
- das Rastelement (16), der Haltehaken (22), die erste Öffnung (18) und die zweite Öffnung (28) so zueinander angeordnet sind, dass das Rastelement (16) gegenüber der ersten Öffnung (18) nur dann angeordnet ist, wenn der Haltehaken (22) in seiner zweiten Position ist.

2. Anordnung nach Anspruch 1, bei der das Rastelement (16) und der Haltehaken (22) benachbart sind und die erste Öffnung (18) durch die zweite Öffnung (28) verlängert wird, um zusammen eine einzige Öffnung zu bilden.

3. Anordnung nach Anspruch 1 oder 2, bei der die zweite Öffnung (28) einen ersten Bereich (28A), der ausreichend groß ist, um den Durchgang des Anschlags (26) durch die Instrumententafel (12) zu gestatten, und einen zweiten Bereich (28B) aufweist, der schmaler als der erste Bereich in eine Richtung, in der sich der Anschlag (26) erstreckt, um den Durchgang des Anschlags (26) durch das Verkleidungsteil (12) zu verhindern.

4. Anordnung nach Anspruch 3, bei der die Anschlagzone (30)teilweise durch den ersten (28A) und den zweiten (28B) Bereich der zweiten Öffnung (28) begrenzt ist.

5. Anordnung nach einem beliebigen der vorhergehenden Ansprüche, bei der der Haltehaken (22) starr ist.

6. Anordnung nach einem beliebigen der vorhergehenden Ansprüche, bei der der Haltehaken (22) eine Höhe in die Richtung seines Schenkels (24) aufweist, die größer als die Höhe des Rastelements (16) in derselben Richtung ist, derart, dass der Anschlag in die Richtung des Schenkels (24) in einem in Bezug auf das Rastelement (16) hervorspringenden Bereich des Hakens (22) ausgebildet ist.

7. Anordnung nach einem beliebigen der vorhergehenden Ansprüche, bei der die erste Öffnung (18) und das Rastelement (16) ausgebildet sind, das Sichtelement (10) in der Gleitrichtung zu blockieren, wenn dieses Rastelement (16) in die erste Öffnung (18) eingreift, derart, dass der Haken (22) in seiner zweiten Position verbleibt.

8. Anordnung nach einem beliebigen der vorhergehenden Ansprüche, bei der das Innenverkleidungsteil (12) ein Element bildet, ausgewählt aus: einer Instrumententafel, einem Innenpaneel, einer Mittelkonsole oder jedem Verkleidungsteil eines Fahrzeugteils.

9. Anordnung nach einem beliebigen der vorhergehenden Ansprüche, bei der das Sichtelement (10) eine Mittelfront bildet.

10. Verfahren zum Zusammensetzen eines Sichtelements (10) und eines Verkleidungsteils (12) einer Anordnung nach einem beliebigen der vorhergehenden Ansprüche, die folgenden Schritte aufweisend:
- Durchführen des Anschlags (26) eines Haltehakens (22) durch die zweite Öffnung (28),
- Verschieben des Haltehakens (22) bis in seine zweite Position, um das Rastelement (16) gegenüber der korrespondierenden ersten Öffnung (18) in Stellung zu bringen,
- Einführen des Rastelements (16) in die erste korrespondierende Öffnung (18).

## Claims

1. Assembly of an interior trim element (12) of an automotive vehicle and of a decorative member (10), **characterised in that**:
- the decorative member (10) comprises at least one locking element (16) and the trim element (12) has at least one first orifice (18) which is complementary to this locking element (16),
- the decorative member (10) comprises at least one retaining hook (22) comprising a tab (24) which extends from a first end (24A), which is connected to the decorative member (10), to a second end (24B), which is provided with a limit stop (26), and the dashboard (12) has at least one second orifice (28) which allows passage of the limit stop (26) through the dashboard (12),
- the second orifice (28) is adapted to allow a displacement of the retaining hook (22), in a sliding direction, between a first position in which the limit stop (26) is opposite this second orifice (28), and a second position in which the limit stop (26) is opposite a limit stop zone (30) which is provided on the dashboard (12), **characterised in that**
- the locking element (16), the retaining hook (22), the first orifice (18) and the second orifice (28) are designed with respect to each other so that the locking element (16) is opposite the first orifice (18) only when the retaining hook (22) is in its second position.

2. Assembly according to claim 1, in which the locking element (16) and the retaining hook (22) are adjacent, and the first orifice (18) is extended by the second orifice (28) so as to form together a single opening.

3. Assembly according to claim 1 or 2, in which the second orifice (28) comprises a first part (28A) which is sufficiently wide to allow passage of the limit stop (26) through the dashboard (12), and a second part (28B) which is narrower than the first part in a direction in which the limit stop (26) extends, so that passage of the limit stop (26) through the trim element (12) is prevented.

4. Assembly according to claim 3, in which the limit stop zone (30) is in part delimited by the first (28A) and second (28B) parts of the second orifice (28).

5. Assembly according to any of the preceding claims, in which the retaining hook (22) is rigid.

6. Assembly according to any of the preceding claims, in which the retaining hook (22) has a height, in the direction of its tab (24), which is greater than the height of the locking element (16) in the same direction, so that the limit stop is formed in a part of the hook (22) which projects relative to the locking element (16) in the direction of the tab (24).

7. Assembly according to any of the preceding claims, in which the first orifice (18) and the locking element (16) are formed in order to block the decorative member (10) in the sliding direction when this locking element (16) is engaged in the first orifice (18), so that the hook (25) remains in its second position.

8. Assembly according to any of the preceding claims, in which the interior trim element (12) forms an element chosen from: a dashboard, an interior panel, a central console or any trim element part of the vehicle.

9. Assembly according to any of the preceding claims, in which the decorative member (10) forms a central façade.

10. Method for assembling a decorative member (10) and a trim element (12) in an assembly according to any of the preceding claims, comprising the following steps:
- passage of the limit stop (26) of the retaining hook (22) through the second orifice (28),
- displacement of the retaining hook (22) to its second position, so that the locking element (16) is placed opposite the corresponding first orifice (18),
- insertion of the locking element (16) into the corresponding first orifice (18).
